# EUROPÄISCHE PATENTANMELDUNG

(11) **EP 0 628 927 A2**
(43) Veröffentlichungstag der Anmeldung: **14.12.1994**
(21) Anmeldenummer: 94109039.1
(22) Anmeldetag: 13.06.1994
(51) Int. Cl.: G06K 19/06

(54) **Markierung in Form von Farbzeichen**

(30) Priorität: 13.06.1993 DE 4319555
(71) Anmelder: Tetra Laval Holdings & Finance SA, 1009 Pully (CH)
(72) Erfinder: Beutel, Rudolf, D-6109 Mühltal Traisa (DE)
(74) Vertreter: Weber, Dieter, Dr.

(57) **Zusammenfassung**

Damit die Verpackung erkannt und wiedergefunden werden kann und eine solche Markierung trägt, die für den normalen Endverbraucher fälschungssicher ist und mit herkömmlichen Methoden nicht ohne weiteres identifiziert oder imitiert werden kann, ist erfindungsgemäß vorgesehen, daß die Farbzeichen (Figur 1) aus unterschiedlicher Farbe derart bestehen, daß jedes Farbzeichen im reflektierenden Licht gegenüber dem anderen Farbzeichen wenigstens einen unterschiedlichen Spektralbereich hat.

## Beschreibung

Die Erfindung betrifft eine Markierung in Form von wenigstens zwei Farbzeichen, die auf der Oberfläche eines Gegenstandes, insbesondere einer Verpackung, aufgebracht sind.

Für den sparsamen Verbrauch der Resourcen ist man bei vielen Produkten dazu übergegangen, diese Produkte nach Ihrem Gebrauch wieder zu verwerten. Dies gilt für Produkte aus unterschiedlichen Materialien, darunter auch Papier, Kunststoffe und mit Kunststoff beschichtete Papiermaterialien, z.B. Flüssigkeitspackungen.

Diese Produkte werden in der Praxis nach ihrem Gebrauch mit anderen gebrauchten Produkten vermischt und zum Abfall gegeben. Für eine gute Wiederverwertung ist es bevorzugt, die Produkte z.B. nach der Materialsorte, aus der sie bestehen, getrennt zu sammeln und zu verarbeiten. Dieses Trennen wurde und wird in großem Umfang manuell durchgeführt mit dem verständlichen Nachteil hoher Kosten und beschränkter Kapazität der Sortierbetriebe.

Ziel vieler Produkthersteller ist es, einen möglichst großen Anteil des hergestellten Produktes, z.B. einer Verpackung, nach Aufbau und Material sortiert, zurückzuerhalten bzw. der Wiederverwertung zuzuführen. Wünscht man eine Automatisierung der Abtrenn- und Sortierverfahren, dann gelingt dies am besten durch Aufbringen einer Markierung auf die Oberfläche des betreffenden Produktes derart, daß Maschinen die aufgebrachten Markierungen erkennen und die entsprechenden Produkte abtrennen können.

Unter anderem zum Auszeichnen von Produkten mit Preisen ist es bekannt, Farbzeichen in Form unterschiedlich angeordneter schwarzer Farbbalken auf die Oberfläche der Produkte aufzubringen. Sensoren tasten derartige Markierungen, z.B. Barcodes, ab und lesen aus dieser Markierung Informationen, z.B. unter anderem den Preis des Produktes. Die meisten der aufgedruckten Markierungen bestehen aus sichtbaren Farbzeichen, z.B. schwarzen Strichen, die man unschwer verändern könnte.

Würde man beispielsweise für Papierverpackungen Pfand einführen, dann könnte jedermann, der eine gebrauchte Verpackung mit der richtigen Markierung in eine Erkennungs- und Sortiermaschine einführt, Geld erhalten. Hier bestehen gewisse Anreize zur Fälschung, so daß die bislang üblichen Markierungen mit schwarzen Balken im Pfandgeschäft ungeeignet erscheinen.

Damit bestimmte Gegenstände, vorzugsweise Verpackungen, erkannt und wiedergefunden werden können, hat sich die Erfindung die Aufgabe gestellt, diese Gegenstände mit derart verbesserten Markierungen der eingangs genannten Art zu versehen, daß sie für den normalen Endverbraucher fälschungssicher sind und mit herkömmlichen Methoden nicht ohne weiteres identifiziert oder imitiert werden können.

Diese Aufgabe wird erfindungsgemäß dadurch gelöst, daß die Farbzeichen aus unterschiedlicher Farbe derart bestehen, daß jedes Farbzeichen im reflektierenden Licht gegenüber dem anderen Farbzeichen wenigstens einen unterschiedlichen Spektralbereich hat. Unter Farbzeichen ist ein beliebiges farbiges Zeichen auf der Oberfläche eines Produktes zu verstehen, z.B. ein schwarzer, roter oder blauer Balken, der auch jede andere Farbe haben könnte. Unter Farbe wird hier auch ein Farbgemisch verstanden, um unterschiedliche Sensoren oder Detektoren in einer Erkennungsmaschine zum Ansprechen zu bringen. Im Gegensatz zu dem herkömmlichen Schwarz-Weiß-Code werden erfindungsgemäß Zeichen unterschiedlicher Farbe verwendet, und zwar in demjenigen Sinne, daß im reflektierenden Licht das eine Farbzeichen einen anderen Spektralbereich hat als das andere Farbzeichen, z.B. schwarz und gelb oder rot und grün usw. Die Farbmischung des betreffenden Zeichens ist derart gewählt, daß das Zeichen nach Bestrahlung durch z.B: weißes Licht entweder in der einen oder anderen Farbe erscheint, so daß nur ein auf diese spezielle Farbe (Spektralbereich) ausgerichteter Detektor oder Sensor das Zeichen erkennen kann. Es ist für den normalen Endverbraucher nicht möglich, die speziell gewählten Farbmischungen zu finden und zu reproduzieren, um die Markierung zu imitieren und das Pfand in unberechtigter Weise mit Hilfe einer bestimmten Maschine zu erhalten. Zwar könnte ein Wissenschaftlicher oder ein entsprechender Industriebetrieb mit gewissem Aufwand die Farbmischung finden und die erfindungsgemäßen Farbzeichen imitieren, die dafür aufgewendeten Kosten stehen aber in keinem Verhältnis zu den Gewinnaussichten, ganz abgesehen davon, daß die angesprochenen Kreise diese Überlegungen nicht zur Basis ihrer Gewinnpläne machen.

Durch die vorstehenden Maßnahmen ist es also möglich, daß die Produkte eines bestimmten Herstellers an diesen oder einen von ihm bestimmten Verwertungsbetrieb zurückgegeben werden. Fälschungen im großen Stil sind ausgeschaltet.

Insbesondere bei Flüssigkeitsverpackungen von Lebensmitteln ist durch die erfindungsgemäßen Maßnahmen ein Pfandsystem möglich, wie es auch bei Mehrwegflaschen aus Glas teilweise schon gehandhabt wurde. Die betreffende Farbe der erfindungsgemäßen Markierung wird vorzugsweise und gerade bei diesem Anwendungsbereich lebensmittelecht hergestellt, wobei z.B. magnetisierbare Massen in den Farben vermieden werden.

Bevorzugt ist es, wenn die in Rede stehenden Farben nicht kopierfähig sind, um auch diesbezüglich einen Betrug zu vermeiden.

Mit den bislang bekannten und für den normalen Endverbraucher herkömmlichen Methoden, wie z.B. Kopieren, auch Farbkopieren, ist die Marke gemäß der Erfindung nicht zu imitieren.

Zweckmäßig ist es gemäß der Erfindung ferner, wenn wenigstens zwei Farbzeichen jeweils einen voneinander getrennten, unterschiedlichen Spektralbereich haben. Bei einer aus zwei Farbzeichen hergestellten Markierung liegt der Spektralbereich des einen Farbzeichens im Abstand getrennt von dem anderen Spektralbereich, wodurch eine besonders deutliche Unterscheidung der beiden Farbzeichen möglich ist. Bei einer anderen Ausführungsform wäre diese Bedingung nicht unbedingt erforderlich, d.h. die eine Farbe des einen Zeichens zeigt hohe Reflexionswerte beispielsweise Über einen größeren Wellenlängenbereich oder einen breiten Spektralbereich, während die Farbe des anderen Zeichens ein schmales Band um eine Wellenlänge herum hat, die bei diesem Beispiel im Spektralbereich der erstgenannten Farbe liegt. Der Spektralbereich der ersten Farbe überdeckt dann den der zweiten Farbe. Gleiches gilt für Markierungen in Form von drei oder vier Farbzeichen, so daß die Markierung drei oder vier verschiedene Farben mit jeweils unterschiedlichem Spektralbereich im reflektierenden Licht hat.

Die jeweilige Farbe gibt ihren Wertinhalt durch eine unterschiedliche Wellenlänge ab, die zwar bei einigen Beispielen überwiegend alle im optisch sichtbaren Bereich liegen, bei anderen und bevorzugten Ausführungsformen zum Teil auch im nicht sichtbaren Bereich liegen. Moderne Farbkopiergeräte sind in der Lage, die verschiedensten Farbtöne im gesamten sichtbaren Spektralbereich wiederzugeben. Wenn man daher, wie auch schon versuchtworden ist, zusätzlich zu einem bekannten Balkencode einen dünnen und kaum sichtbaren, türkisfarbenen Balken hinzufügt, dann kann mit einem Farbkopierer guter Qualität eine solche Markierung imitiert werden. Wenn erfindungsgemäß hingegen auch Farbzeichen aus dem nicht sichtbaren Spektralbereich verwendet werden, z.B. mit Wellenlängen aus dem Infrarot, dann ist die neue Markierung jedenfalls nicht mit üblichen Maschinen kopierfähig. Das menschliche Auge kann eine solche Markierung nicht bezüglich ihres gesamten Wertinhaltes erfassen und wiedergeben. Durch solche kopiersicheren Farbzeichen ist die Schwelle der Fälschungssicherheit sehr hoch gesetzt worden. Eine Fälschung mag zwar nicht vollkommen ausgeschlossen sein, für den Normalverbraucher ist sie aber derart erschwert, daß eine Imitation nicht zumutbare Aufwendungen voraussetzt und daher weitgehend unterlassen wird.

Erfindungsgemäß ist es besonders vorteilhaft, wenn das erste Zeichen oder die erste Gruppe von Zeichen eine Trägerfarbe mit einem im reflektierenden Licht im Infrarot liegenden Spektralbereich um z.B. λ = 880 nm hat/haben und das zweite Zeichen oder die zweite Gruppe von Zeichen eine Farbe mit einem im reflektierenden Licht im Sichtbaren liegenden Spektralbereich um z.B. λ = 660 nm hat/haben. Bei dieser Ausführungsform ist zwischen sichtbaren und nicht sichtbaren (nämlich Infrarot) Farbzeichen unterschieden. Die im Sichtbaren liegende Wellenlänge entspricht der Farbe Rot. Die im Infrarot liegende Wellenlänge soll bei dem genannten ersten Zeichen bzw. der genannten ersten Gruppe von Zeichen jedenfalls vorhanden sein, wobei aber nicht ausgeschlossen ist, daß der Spektralbereich mit der im Infrarot liegenden Wellenlänge sich auch bis in den sichtbaren Bereich erstreckt, so daß bei einem besonderen Beispiel diese erste Farbe auch den Spektralbereich der zweiten Farbe überdeckt, weshalb die erste Farbe die Trägerfarbe genannt wird.

Besonders zweckmäßig ist es dabei, wenn erfindungsgemäß die Trägerfarbe im reflektierenden Licht einen sichtbaren und infraroten Spektralbereich von z.B. 600 nm ≦ λ ≦ 900 nm hat und vorzugsweise eine auf Kohlenstoff basierende schwarze Farbe ist. Eine solche Farbe ist technisch besonders einfach herstellbar und daher preiswert und in ihrer Wirkung doch sehr effektiv, weil Nachahmer unter Umständen nicht feststellen können, daß es außerdem noch Zeichen einer anderen Farbe gibt. Es ist möglich, derartige, auf Kohlenstoff basierende schwarze Farben lebensmittelgeprüft zu erhalten aus dem nicht toxischen Bereich, so daß derartige Farben selbstverständlich auch für den Lebensmittelbereich freigegeben sind und für Milch-, Säftepackungen und dergleichen verwendet werden können. Im Falle dieser Flüssigkeitspackungen ist es möglich, die erfindungsgemäße Markierung bei der Produktion aufzubringen und den Packungstyp von der Produktion bis zur Wiederverwertung zu verfolgen und in jeder Zwischenstation zu erkennen.

Dabei kann man die Farbzeichen in Form von Rauten, Kreisen, Strichen, Feldern, Punkten und dergleichen aufbringen, so daß für den Fälscher auch schon von daher erhebliche Nachahmungsschwierigkeiten vorgegeben werden können. Die Markierung gemäß der Erfindung kann z.B. in den Druck gegeben, als Etikett aufgebracht oder auf die Oberfläche durch Aufsprühen, Aufspritzen oder mit dem Tintenstrahldrucker aufgebracht werden. Auch mit einem Laserprinter könnte man eine solche Markierung auf die Oberfläche des Produktes aufbringen.

Weitere Merkmale, Vorteile und Anwendungsbeispiele ergeben sich aus der folgenden Beschreibung bevorzugter Ausführungsbeispiele in Verbindung mit den anliegenden Zeichnungen.
Es zeigen:
- Figur 1: eine mit dem menschlichen Auge ohne optische Zusatzmittel erkennbare Markierung in Form eines Balkencodes im sichtbaren Bereich,
- Figur 2: der eine Teil des Farbdruckes, aus weichem die Markierung hergestellt ist, dessen Spektralbereich sowohl im sichtbaren als auch im infraroten Bereich liegt,
- Figur 3: der andere Teil des Farbdruckes, dessen Spektralbereich nur im Sichtbaren liegt,
- Figur 4: diejenige Markierung, welche der sogenannte rote Photosensor erfaßt,
- Figur 5: diejenige Markierung, welche der sogenannte infrarote Photosensor erfaßt,
- Figur 6: das Empfindlichkeitsdiagramm des roten Photosensors,
- Figur 7: das Empfindlichkeitsdiagramm des infraroten Photosensors,
- Figur 8: eine aufgedruckte Markierung in Form eines Barcode,
- Figur 9: eine andere Ausführungsform einer Markierung in Form eines Rechteckcodes und
- Figur 10: wieder eine andere Art von Markierung in Form eines Kreiscodes.

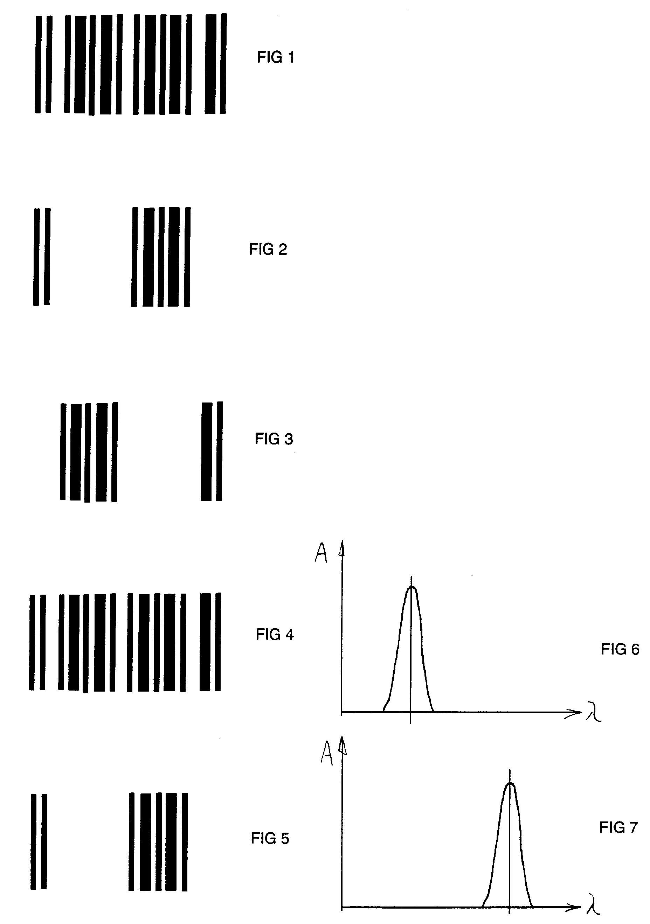

Figur 1 zeigt eine erste Ausführungsform einer Markierung gemäß der Erfindung, die in Form von zwei Gruppen von Farbzeichen aufgebaut ist, wobei jedes Farbzeichen mit dem menschlichen Auge wie ein schwarzer Balken aussieht. Diese Markierung gemäß Figur 1 ist beispielsweise auf der Oberfläche einer Flüssigkeitspackung aufgedruckt. Das Besondere dieser Markierung liegt nun darin, daß jede Gruppe von Farbzeichen aus einer anderen Farbe besteht Würde z.B. eine Flüssigkeitspackung nach dem Gebrauch in einen Erkennungsautomaten mit der Marke auf der richtigen Seite eingeschoben werden, dann würde der z.B. rote Photosensor die Markierung gemäß Figur 1 lesen. Ein Fälscher könnte eine solche Markierung durch Kopieren imitieren, würde aber von dem Erkennungsautomaten kein Pfand bekommen, weil dort ein infraroter Photosensor nachgeschaltet ist, der von dem kopierten Markierungsimitat kein Signal erfassen würde, die mit dieser (gefälschten) Markierung versehene Verpackung also zurückweisen würde.

Bei der erfindungsgemäßen Markierung ist der Aufbau nämlich derart, daß die Summe der Gruppen von Farbzeichen in Figur 1 sich zusammensetzt aus der ersten Gruppe von Farbzeichen, die in der Form der Figur 2 angeordnet sind, plus der zweiten Gruppe von Farbzeichen, die gemäß der Darstellung der Figur 3 aufgebaut sind. Erst die Summe der beiden Gruppen von Farbzeichen ergibt die Darstellung der Figur 1. Die erste Gruppe von Farbzeichen gemäß Figur 2 ist z.B. aus der sogenannten Trägerfarbe hergestellt und hat einen breiten Spektralbereich, der sowohl den sichtbaren als auch den infraroten Bereich erfaßt. Wie schon in Verbindung mit Figur 1 gesagt, erkennt das menschliche Auge diese erste Gruppe von Farbzeichen in ihrer Form und in ihrem Aufbau vollständig. Im Unterschied zu bekannten derartigen Barcodes würde aber auch ein infraroter Photosensor diese Markierung gemäß Figur 2 erfassen.

Die zweite Gruppe von Farbzeichen ist in Figur 3 dargestellt und zeigt denjenigen Teil des auf der Oberfläche des Produktes aufgebrachten Farbdruckes, d.h. also der schwarzen Balken auf weißem Papier, der nur in dem im Sichtbaren liegenden Spektralbereich liegt. Im Gegensatz zu dem Barcode der Figur 2 würde ein infraroter Photosensor den Barcode der Figur 3 nicht erkennen.

Setzt man nun die Markierungsteile der Figur 1 und der Figur 3 zusammen, dann erhält man die Markierung der Figur 1 mit den vorgenannt beschriebenen Eigenschaften.

Wird diese Markierung der Figur 1 durch einen Erkennungsautomaten geschickt, welcher zwei Photosensoren nacheinander derart aufweist, daß z.B. zuerst der rote Photosensor und danach der infrarote Photosensor ein und dieselbe Markierung abtastet, dann zeigt sich bei nicht gefälschter Markierung folgendes Bild:
Der rote Photosensor erkennt die gesamte Markierung in einer Form, wie sie in Figur 4 dargestellt ist Diese Form ist identisch mit der der Figur 1, weil der rote Photosensor in vergleichbarem Spektralbereich arbeitet wie das menschliche Auge. Tatsächlich ist sowohl die Markierung der Figur 2 als auch die der Figur 3 von dem roten Photosensor zu erfassen. Deshalb ergibt sich die Darstellung der Figur 4.

Vorgreifend wird schon jetzt darauf hingewiesen, daß das Diagramm der Figur 6 dem in Figur 4 gezeigten Ergebnis zugeordnet ist. In beiden Diagrammen der Figuren 6 und 7 ist über der Wellenlänge λ (Abszisse) die Empfindlichkeit A (Amplitude) des betreffenden Photosensors dargestellt. Der Spektralbereich z.B. des roten Photosensors (sichtbarer Bereich) liegt um 660 nm und ist daher weiter links angeordnet als der Spektralbereich im Infraroten gemäß Figur 7, in welcher die Empfindlichkeit des infraroten Photosensors dargestellt ist bei einem Spektralbereich um z.B. λ = 880 nm.

Mit dem roten Photosensor der Empfindlichkeitskurve nach Figur 6 wird also eine Markierung gemäß Figur 4 gemessen.

Durchläuft dieselbe Markierung danach den infraroten Photosensor, so mißt dieser mit seiner Empfindlichkeitskurve gemäß Figur 7 die Teilmarkierung gemäß Figur 5. Diese Teilmarkierung entspricht bei diesem Beispiel ersichtlich der ersten Gruppe von Farbzeichen der Figur 2. Es handelt sich hier um Farbzeichen, die sowohl von dem roten als auch von dem infraroten Photosensor erfaßt werden. Dabei ergibt sich, daß nur die Markierung der Figur 5 von dem Infraroten Photosensor erkannt wird.

Ein nicht dargestelltes anderes Ausführungsbeispiel wäre für Farben denkbar, bei welchen beispielsweise eine Markierung gemäß Figur 2 eine Farbe hätte, die nur im infraroten Bereich läge; während die zweite Gruppe von Farbzeichen gemäß Figur 3 eine Farbe mit einem im Sichtbaren liegenden Spektralbereich hätte.

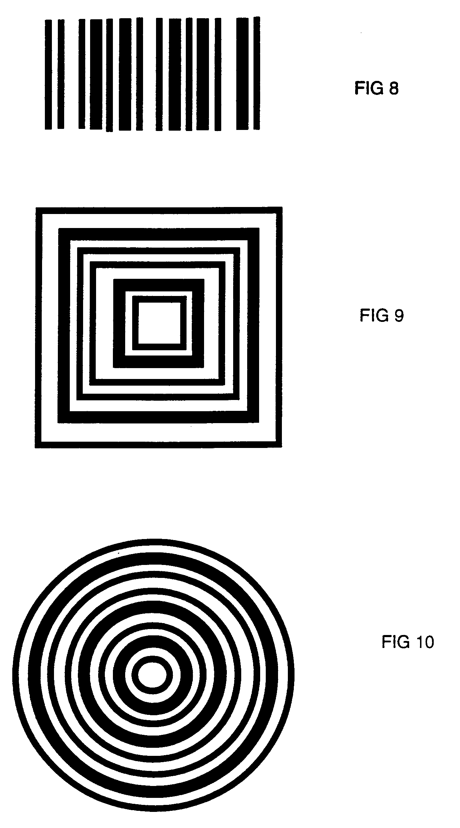

In Figur 8 ist zum Vergleich nochmals der Barcode gemäß Figur 1 wiedergegeben.

Figur 9 zeigt eine andere Ausführungsform einer Markierung, bei welcher geradlinige Balken im Quadrat angeordnet sind.

Bei einer weiteren anderen Ausführungsform könnte man die Farbzeichen auch in Gestalt unterschiedlich breiter Kreise darstellen und in der in Figur 10 gezeigten Weise anordnen.

## Patentansprüche

1. Markierung in Form von wenigstens zwei Farbzeichen, die auf der Oberfläche eines Gegenstandes, insbesondere einer Verpackung, aufgebracht sind, dadurch gekennzeichnet, daß die Farbzeichen (Figuren 8 bis 10) aus unterschiedlicher Farbe derart bestehen, daß jedes Farbzeichen (Figur 2) im reflektierenden Licht gegenüber dem anderen Farbzeichen (Figur 3) wenigstens einen unterschiedlichen Spektralbereich hat.

2. Markierung nach Anspruch 1, dadurch gekennzeichnet, daß wenigstens zwei Farbzeichen jeweils einen voneinander getrennten, unterschiedlichen Spektralbereich haben.

3. Markierung nach Anspruch 1 oder 2, dadurch gekennzeichnet, daß das erste Zeichen oder die erste Gruppe von Zeichen (Figur 2) eine Trägerfarbe mit einem im reflektierenden Licht im Infrarot liegenden Spektralbereich hat/haben und das zweite Zeichen oder die zweite Gruppe von Zeichen (Figur 3) eine Farbe mit einem im reflektierenden Licht im Sichtbaren liegenden Spektralbereich hat/haben.

4. Markierung nach Anspruch 3, dadurch gekennzeichnet, daß die Trägerfarbe im reflektierenden Licht einen sichtbaren und infraroten Spektralbereich hat.

5. Markierung nach Anspruch 4, dadurch gekennzeichnet, daß die Trägerfarbe eine auf Kohlenstoff basierende schwarze Farbe ist.
